# EUROPEAN PATENT SPECIFICATION

(11) **EP 4 284 064 B1**
(45) Date of publication and mention of the grant of the patent: **08.07.2026**
(21) Application number: 23174269.3
(22) Date of filing: 19.05.2023
(51) Int. Cl.: H04W 36/00, H04W 36/08, H04W 92/20

(54) **PROACTIVE APPROACH TO SELECT XNAP/NGAP-BASED HANDOVER**
PROAKTIVER ANSATZ ZUR AUSWAHL VON XNAP/NGAP-BASIERTEM HANDOVER
APPROCHE PROACTIVE POUR SÉLECTIONNER UN TRANSFERT BASÉ SUR XNAP/NGAP

(30) Priority: 23.05.2022 IN 202221029606; 17.05.2023 US 202318318798
(43) Date of publication of application: 29.11.2023
(73) Proprietor: Mavenir Systems, Inc., Richardson, TX 75081 (US)
(72) Inventor: SUNDARARAJAN, Srinivasan, 560037 Bangalore (IN)
(74) Representative: Studio Torta S.p.A.

(56) References cited:
- 3GPP TS 38.423 V17.0.0: "3GPP TS 38.423 V17.0.0 (2022-04); 3rd Generation Partnership Project; Technical Specification Group Radio Access Network; NG-RAN; Xn application protocol (XnAP) (Release 17)", vol. RAN WG3, no. V17.0.0, 6 April 2022 (2022-04-06), pages 1 - 609, XP052146526, Retrieved from the Internet <URL:https://ftp.3gpp.org/Specs/archive/38_series/38.423/38423-h00.zip 38423-h00.doc> [retrieved on 20220406]
- 3GPP TS 38.413 V17.0.0: "3GPP TS 38.413 V17.0.0 (2022-04); 3rd Generation Partnership Project; Technical Specification Group Radio Access Network; NG-RAN; NG Application Protocol (NGAP) (Release 17)", vol. RAN WG3, no. V17.0.0, 6 April 2022 (2022-04-06), pages 1 - 561, XP052146521, Retrieved from the Internet <URL:https://ftp.3gpp.org/Specs/archive/38_series/38.413/38413-h00.zip 38413-h00.doc> [retrieved on 20220406]
- CATT: "3GPP TSG-RAN WG3 Meeting 3117e; R3-224634; Exchange of Served GUAMI List over XnAP", vol. RAN WG3, no. Online; 20220815 - 20220824, 9 August 2022 (2022-08-09), XP052264801, Retrieved from the Internet <URL:https://ftp.3gpp.org/tsg_ran/WG3_Iu/TSGR3_117-e/Docs/R3-224634.zip R3-224634 CR for TS 38.423 Exchange Served GUAMI List over XnAP.doc> [retrieved on 20220809]

## Description

### BACKGROUND OF THE INVENTION

The present disclosure relates to Radio Access Network (RAN) for 4G- and 5G-based mobile networks, and relates more particularly to handovers optimization when a user equipment (UE) moves from one cell to another cell in the RAN.

In 5G New Radio (NR) standards, handovers between a first next Generation Node B (gNB) and a second gNB are performed using an Xn interface or Next Generation Application Protocol (NGAP). Xn handover is performed through an Xn connection between two gNBs. NGAP handover is performed in the following sequence: the source gNB -> Access & Mobility Function (AMF) -> target gNB. Xn handover is preferred over NGAP handover due to less hop and typically faster speed.

UE would be connected to the source gNB, and the source gNB would have selected a specific Access & Mobility Function (AMF) to handle this UE. Source gNB receives the measurement report for the UE (for mobility) and then it identifies the target gNB. Source gNB sends the Xn handover request towards the target gNB. As part of the Xn handover request, source gNB specifies the Globally Unique AMF Identifier (GUAMI) of the AMF which currently handles the UE. As per 3rd Generation Partnership Project (3GPP) Technical Specification (TS) 23.502, Xn handovers are only supported for intra-AMF mobility.

As per 3GPP TS 23.003, the following are specified:
<GUAMI> = <MCC><MNC><AMF Identifier>
   and
<AMF Identifier> = <AMF Region ID><AMF Set ID><AMF Pointer>

Mobile Country Code (MCC) and Mobile Network Code (MNC) shall have the same field size as in earlier 3GPP systems.

AMF Region ID shall be of 8 bits length.

AMF Set ID shall be of 10 bits length.

AMF Pointer shall be of 6 bits length.

On receiving the Xn handover request, the target gNB performs the following checks:
1. It checks whether it supports AMF set ID as received in handover request.
   a. If not supported, target gNB rejects the Xn handover request by sending handover preparation failure notification with cause as Invalid AMF Set ID.
2. If AMF set ID is supported, it checks whether it knows the GUAMI and has connection to this specified AMF or not.
   a. If not supported (or) not connected, target gNB rejects the Xn handover request by sending handover preparation failure notification with cause as Unknown GUAMI ID.

Upon receiving the handover preparation failure with the above causes, source gNB understands that the current AMF (which serves the UE) is not supported by the target gNB. Subsequently, the source gNB triggers the NGAP handover procedure. As part of the NGAP handover procedure, AMF relocation could be needed.

The above-described approach is a reactive approach because Xn AP handover is initially attempted, and only upon its failure is an NGAP handover initiated. This reactive approach has the following disadvantages:
1. This can actually increase the overall handover time.
2. This can lead to call drop due to delay in handover.
3. This leads to additional Xn signaling.
4. Xn handover preparation key performance indicators (KPIs) would be impacted negatively.

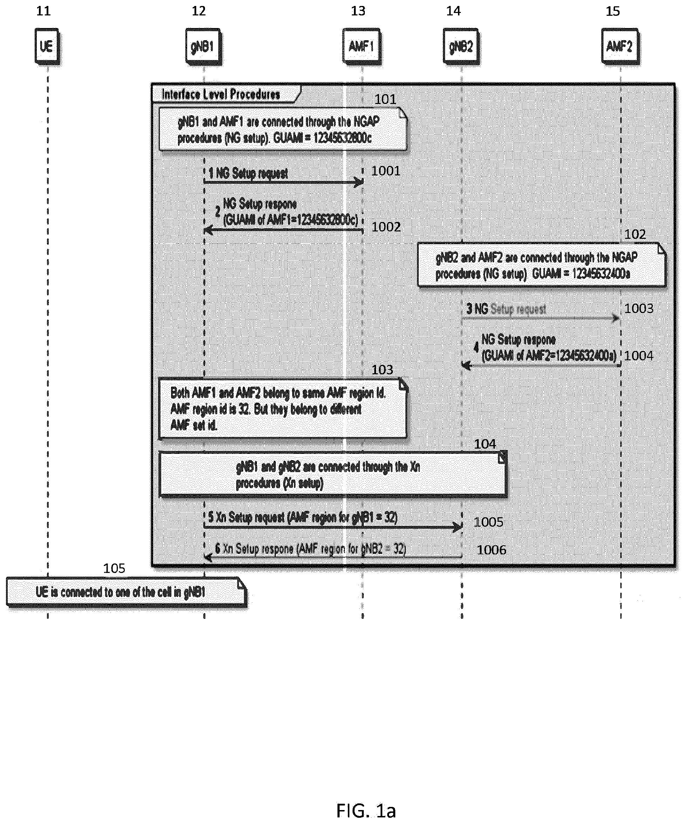

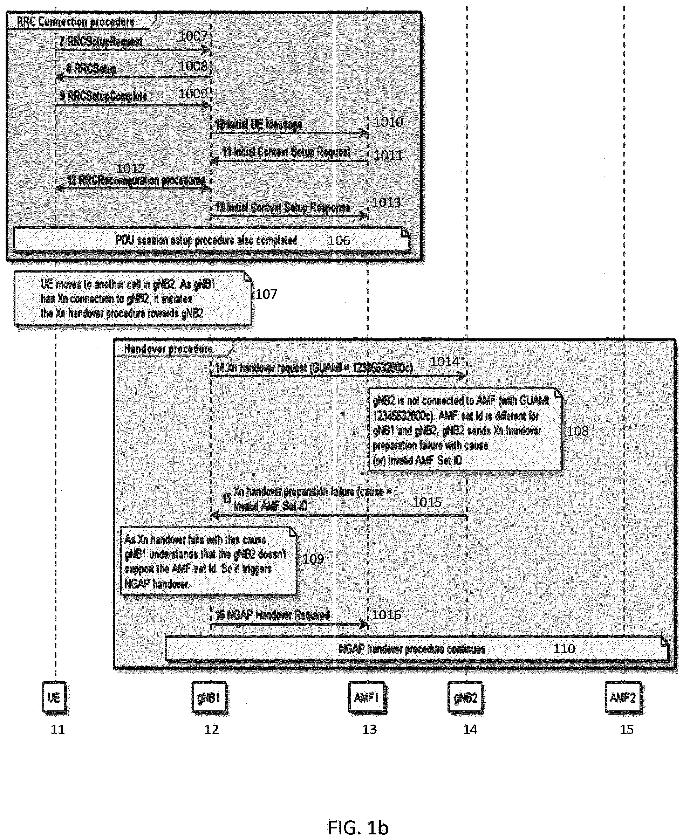

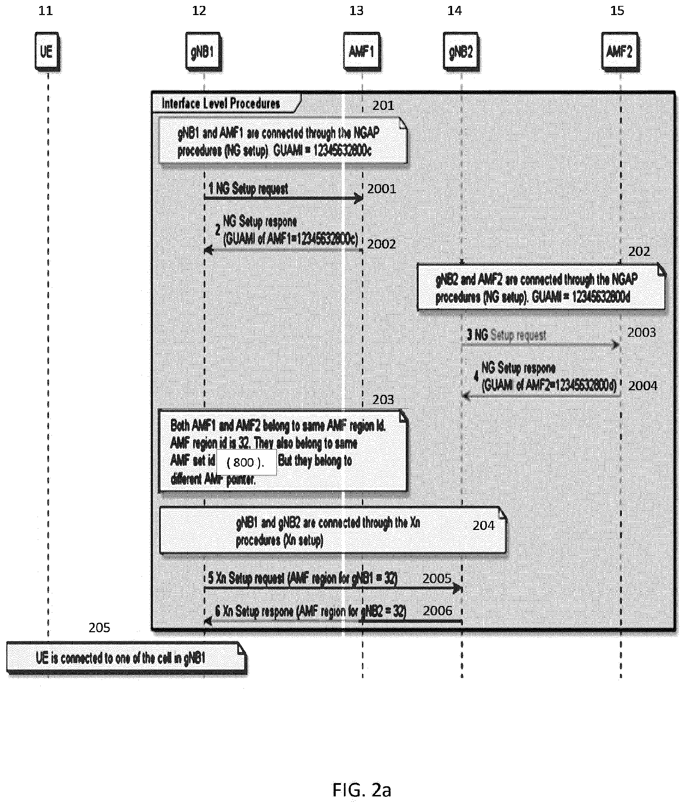

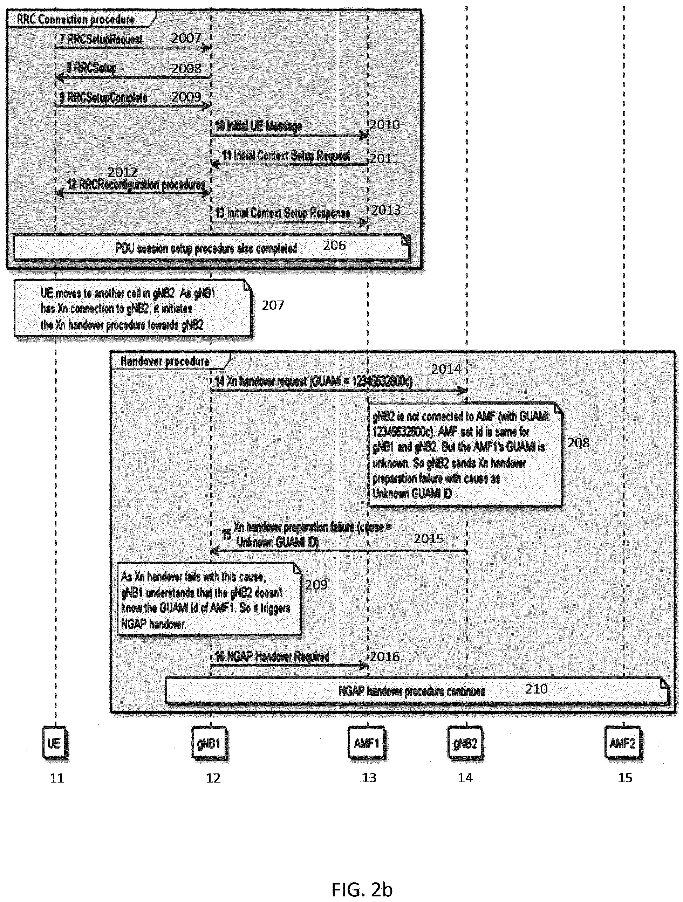

To remedy the above-discussed disadvantages of the reactive approach, a proactive approach can be implemented, in which proactive approach the source gNB knows whether the AMF (which currently serves the UE) is supported by the target gNB or not. If the AMF is supported, then only the Xn handover should be initiated. If the AMF is not supported, the NGAP handover shall be directly initiated. The current call flows based on invalid AMF set Id is illustrated in FIGs. 1a and 1b, and the current call flows based on unknown GUAMI Id are illustrated in FIGs. 2a & 2b.

FIGs. 1a and 1b illustrate the call flow sequence of a scenario in which Xn handover failure occurs with invalid AMF Set ID, and NGAP handover is subsequently triggered. The call flow sequence starts at the top with the interface level procedures, the beginning of which is summarized in box 101 of FIG. 1a, i.e., first gNB (gNB1) 12, and a first AMF (AMF1) 13, are connected through the NGAP procedures (i.e., NG setup), with the GUAMI of the AMF1 13 being 12345632800c. The NGAP procedures start with the gNB1 12 sending the NG setup request to the AMF1 13, as shown by the process arrow 1001. NG setup response is sent by AMF1 13 to the gNB1 12, GUAMI of the AMF1 13 being 12345632800c, as shown by the process arrow 1002. Next, as summarized in box 102 of FIG. 1a, second gNB (gNB2) 14, and a second AMF (AMF2) 15, are connected through the NGAP procedures (i.e., NG setup), with the GUAMI of the AMF2 15 being 12345632400a. The NGAP procedures start with the gNB2 14 sending the NG setup request to the AMF2 15, as shown by the process arrow 1003. NG setup response is sent by AMF2 15 to the gNB2 14, GUAMI of the AMF2 15 being 12345632400a, as shown by the process arrow 1004.

As summarized in box 103 of FIG. 1a, both AMF1 13 and AMF2 15 have (i.e., belong to) the same AMF region ID of 32, but AMF1 13 and AMF2 15 have (i.e., belong to) different AMF set IDs. Next, as summarized in box 104, gNB1 12 and gNB2 14 are connected through the Xn procedures (i.e., Xn setup). The Xn procedures start with the gNB1 12 sending the Xn setup request (with AMF region ID of 32 for gNB1 12) to gNB2 14, as shown by the process arrow 1005. Next, gNB2 14 sends the Xn setup response (with AMF region ID of 32 for gNB2 14) to the gNB1 12, as shown by the process arrow 1006. At this point in the call flow, UE 11 is connected to one of the cells in gNB1 12, as summarized in box 105.

The call flow illustrated in FIG. 1a is continued in FIG. 1b, with the radio resource connection (RRC) procedure shown at the top, which starts with the UE 11 sending the RRC Setup Request message 1007 to the gNB1 12. In response, the gNB1 12 sends the RRC Setup message 1008 to the UE 11, which in turn sends the RRC Setup Complete message 1009 to the gNB1 12. Next, the Initial UE message 1010 is sent from the gNB1 12 to the AMF1 13, which in turn responds by sending the Initial Context Setup Request message 1011 to the gNB1 12. Subsequently, RRC Reconfiguration procedures 1012 are implemented between the gNB1 12 and the UE 11. This is followed by the Initial Context Setup Response message 1013 being sent from the gNB1 12 to the AMF1 13. At this point in the call flow sequence, the Protocol Data Unit (PDU) session setup procedure is completed, as summarized in box 106.

Next in the call flow sequence, as summarized in box 107 shown in FIG. 1b, the UE moves to another cell in gNB2 14, and gNB1 12 (which has Xn connection to gNB2 14) initiates the Xn handover procedure towards the gNB2 14. The Xn handover procedure starts with the gNB1 12 sending the Xn handover request (with GUAMI of 12345632800c) to the gNB2 14, as shown by the process arrow 1014. At this point in the call flow sequence, gNB2 14 is not connected to AMF1 13 (with GUAMI of 12345632800c), i.e., the respective AMF set IDs for gNB1 12 and gNB2 14 are different (800 and 400, respectively), as summarized in box 108. Therefore, the gNB2 14 sends to gNB1 12 a message indicating Xn handover preparation failure with cause, i.e., Invalid AMF Set ID, as shown by the process arrow 1015. As summarized in box 109, Xn handover fails with the cause of Invalid AMF Set ID, and gNB1 12 understands that gNB2 14 doesn't support the AMF Set ID contained in GUAMI of 12345632800c, so gNB1 12 triggers NGAP handover. The NGAP handover is initiated by the gNB1 12 sending NGAP Handover Required message 1016 to the AMF1 13, and the NGAP handover procedure continues thereafter, as summarized in box 110.

FIGs. 2a and 2b illustrate the call flow sequence of a scenario in which Xn handover failure occurs with unknown GUAMI ID, and NGAP handover is subsequently triggered. The call flow sequence starts at the top with the interface level procedures, the beginning of which is summarized in box 201 of FIG. 2a, i.e., first gNB (gNB1) 12, and a first AMF (AMF1) 13, are connected through the NGAP procedures (i.e., NG setup), with the GUAMI of the AMF1 13 being 12345632800c. The NGAP procedures start with the gNB1 12 sending the NG setup request to the AMF1 13, as shown by the process arrow 2001. NG setup response is sent by AMF1 13 to the gNB1 12, GUAMI of the AMF1 13 being 12345632800c, as shown by the process arrow 2002. Next, as summarized in box 202 of FIG. 2a, second gNB (gNB2) 14, and a second AMF (AMF2) 15, are connected through the NGAP procedures (i.e., NG setup), with the GUAMI of the AMF2 15 being 12345632800d. The NGAP procedures start with the gNB2 14 sending the NG setup request to the AMF2 15, as shown by the process arrow 2003. NG setup response is sent by AMF2 15 to the gNB2 14, GUAMI of the AMF2 15 being 12345632800d, as shown by the process arrow 2004.

As summarized in box 203 of FIG. 2a, both AMF1 13 and AMF2 15 have (i.e., belong to) the same AMF region ID of 32, and the same AMF set ID of 800, but AMF1 13 and AMF2 15 have (i.e., belong to) different AMF pointers ("c" for AMF1 13, and "d" for AMF2 15). Next, as summarized in box 204, gNB1 12 and gNB2 14 are connected through the Xn procedures (i.e., Xn setup). The Xn procedures start with the gNB1 12 sending the Xn setup request (with AMF region ID of 32 for gNB1 12) to gNB2 14, as shown by the process arrow 2005. Next, gNB2 14 sends the Xn setup response (with AMF region ID of 32 for gNB2 14) to the gNB1 12, as shown by the process arrow 2006. At this point in the call flow, UE 11 is connected to one of the cells in gNB1 12, as summarized in box 205.

The call flow illustrated in FIG. 2a is continued in FIG. 2b, with the radio resource connection (RRC) procedure shown at the top, which starts with the UE 11 sending the RRC Setup Request message 2007 to the gNB1 12. In response, the gNB1 12 sends the RRC Setup message 2008 to the UE 11, which in turn sends the RRC Setup Complete message 2009 to the gNB1 12. Next, the Initial UE message 2010 is sent from the gNB1 12 to the AMF1 13, which in turn responds by sending the Initial Context Setup Request message 2011 to the gNB1 12. Subsequently, RRC Reconfiguration procedures 2012 are implemented between the gNB1 12 and the UE 11. This is followed by the Initial Context Setup Response message 2013 being sent from the gNB1 12 to the AMF1 13. At this point in the call flow sequence, the Protocol Data Unit (PDU) session setup procedure is completed, as summarized in box 206.

Next in the call flow sequence, as summarized in box 207 shown in FIG. 2b, the UE moves to another cell in gNB2 14, and gNB1 12 (which has Xn connection to gNB2 14) initiates the Xn handover procedure towards the gNB2 14. The Xn handover procedure starts with the gNB1 12 sending the Xn handover request (with GUAMI of 12345632800c) to the gNB2 14, as shown by the process arrow 2014. At this point in the call flow sequence, gNB2 14 is not connected to AMF1 13 (with GUAMI of 12345632800c), i.e., the respective AMF set IDs for gNB1 12 and gNB2 14 are the same, but the GUAMI of AMF1 13 is unknown to (i.e., is not recognized as being known to) gNB2 14, as summarized in box 208. Therefore, the gNB2 14 sends to gNB1 12 a message indicating Xn handover preparation failure with cause, i.e., Unknown GUAMI ID, as shown by the process arrow 2015. As summarized in box 209, Xn handover fails with the cause of Unknown GUAMI ID, and gNB1 12 understands that gNB2 14 doesn't know the GUAMI of AMF1 13, so gNB1 12 triggers NGAP handover. The NGAP handover is initiated by the gNB1 12 sending NGAP Handover Required message 2016 to the AMF1 13, and the NGAP handover procedure continues thereafter, as summarized in box 210.

As described above, only the AMF region Id is exchanged between two gNBs as part of the conventional Xn setup request/response procedure (e.g., as shown in FIGS. 1a-1b and 2a-2b), but each gNB doesn't know the supported GUAMI(s) of a peer (target) gNB.
Document 3GPP TS 38.423 V17.0.0: "3GPP TS 38.423 V17.0.0 (2022-04); 3rd Generation Partnership Project; Technical Specification Group Radio Access Network; NG-RAN; Xn application protocol (XnAP) (release 17)"; vol. RAN WG3, no. V17.0.0, 6 April 2022, pages 1-609, discusses mobility procedures in an NG-RAN node for an incoming handover implementing Xn setup procedure.
Document 3GPP TS 38.413 V17.0.0: "3GPP TS 38.413 V17.0.0 (2022-04); 3rd Generation Partnership Project; Technical Specification Group Radio Access Network; NG-RAN; NG application protocol (NGAP) (release 17)"; vol. RAN WG3, no. V17.0.0, 6 April 2022, pages 1-561, discusses mobility procedures in an NG-RAN node for an incoming handover implementing NGAP procedure.
However, the above-mentioned issues are not solved.

Therefore, there is a need for a solution that optimizes the handover procedure by providing the information regarding the supported GUAMI(s) of a peer (target) gNB.

### SUMMARY OF THE INVENTION

The present invention relates to a method of operating a Radio Access Network to optimize a handover between a first next Generation Node B and a second gNB, as defined in claim 1.

According to an example embodiment of the present disclosure, a method is presented in which, in addition to exchanging the respective AMF region Ids between two gNBs, all supported GUAMIs shall be exchanged as part of the Xn setup request/response procedure, thereby enabling each gNB to know the supported GUAMI(s) of a peer (target) gNB.

According to an example embodiment of the present disclosure, before initiating the Xn handover, source gNB shall check whether the target gNB supports the AMF (which currently serves the UE). If supported, the source gNB shall proceed with the Xn-based handover. If the AMF is not supported by the target gNB, the source gNB shall initiate the NGAP handover.

According to an example embodiment of the present disclosure, a method is presented in which the Xn setup request/response procedure as specified in 3GPP Xn specification TS 38.423 is modified such that all supported GUAMIs are exchanged as part of the Xn setup request/response procedure.

According to an example embodiment of the present disclosure, all supported GUAMIs shall be added as part of the New Generation Radio Access Network (NG-RAN) Configuration Update procedure, as well. Whenever there is any change in supported GUAMIs (addition/deletion/modification), the gNB shall initiate the NG-RAN configuration update towards the peer (target) gNB with the whole list of GUAMIs.

### BRIEF DESCRIPTION OF THE DRAWINGS

FIGs. 1a and 1b illustrate the call flow sequence of a scenario in which Xn handover failure occurs with invalid AMF Set ID, and NGAP handover is subsequently triggered.
FIGs. 2a and 2b illustrate the call flow sequence of a scenario in which Xn handover failure occurs with unknown GUAMI ID, and NGAP handover is subsequently triggered.
FIGs. 3a and 3b illustrate an example call flow sequence for a proactive initiation of NGAP handover according to the present disclosure.

### DETAILED DESCRIPTION OF THE INVENTION

According to an example embodiment of the present disclosure, a method is presented in which, in addition to exchanging the respective AMF region IDs between two gNBs, all supported GUAMIs shall be exchanged as part of the Xn setup request/response procedure, thereby enabling each gNB to know the supported GUAMI(s) of a peer (target) gNB. The Xn setup request/response procedure as specified in 3GPP Xn specification TS 38.423 is modified to reflect the exchange of all supported GUAMIs in the Xn setup request/response procedure. More specifically, the new IE List of GUAMIs (Served GUAMI List) needs to be added in the following messages: Xn setup request, Xn setup response, NG-RAN Node Configuration Update, NG-RAN Node Configuration Update acknowledge message in 3GPP Xn Application Protocol (XnAP) Technical Specification TS 38.423.

| **IE/Group Name** | | | **Presence** | **Range** | **IE type and reference** | **Semantics description** |
|---|---|---|---|---|---|---|
| **Served GUAMI List** | | | O | | | |
| | **>Served GUAMI Item** | | | *1..<maxno ofServedG UAMIs>* | | |
| | | >>GUAMI | M | | | |

"maxnoofServedGUAMls" - Maximum no. of GUAMIs served by an AMF; value is 256. Definition of GUAMI is same as section 9.3.3.3 in 3GPP NGAP 38.413 specification.

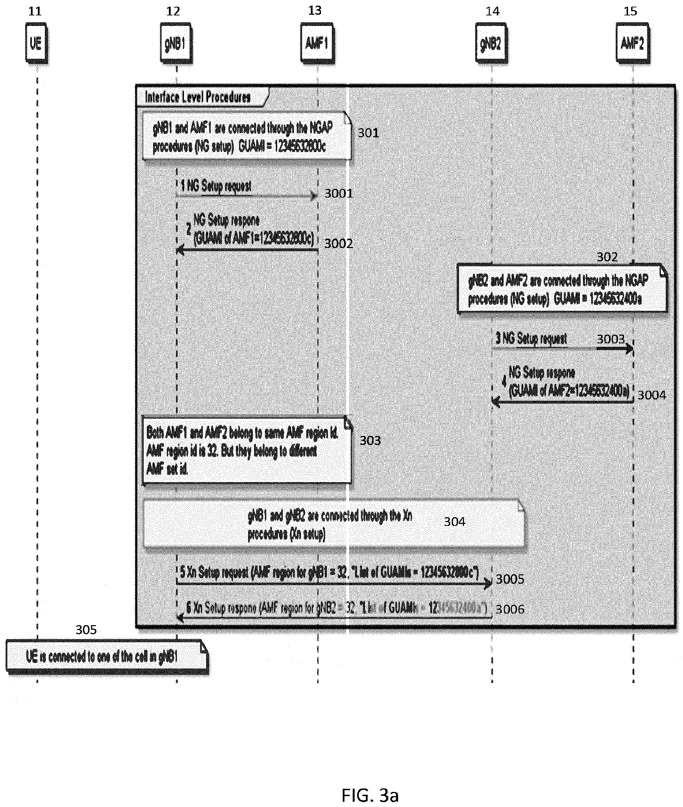

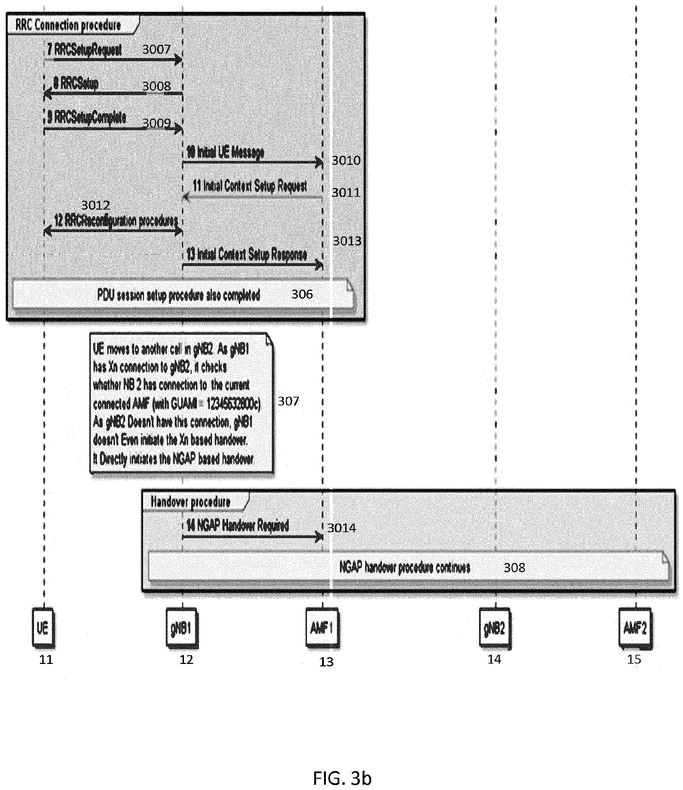

FIGs. 3a and 3b illustrate an example call flow sequence for a proactive initiation of NGAP handover according to the present disclosure. The call flow sequence starts at the top with the interface level procedures, the beginning of which is summarized in box 301 of FIG. 3a, i.e., first gNB (gNB1) 12, and a first AMF (AMF1) 13, are connected through the NGAP procedures (i.e., NG setup), with the GUAMI of the AMF1 13 being 12345632800c. The NGAP procedures start with the gNB1 12 sending the NG setup request to the AMF1 13, as shown by the process arrow 3001. NG setup response is sent by AMF1 13 to the gNB1 12, GUAMI of the AMF1 13 being 12345632800c, as shown by the process arrow 3002. Next, as summarized in box 302 of FIG. 3a, second gNB (gNB2) 14, and a second AMF (AMF2) 15, are connected through the NGAP procedures (i.e., NG setup), with the GUAMI of the AMF2 15 being 12345632400a. The NGAP procedures start with the gNB2 14 sending the NG setup request to the AMF2 15, as shown by the process arrow 3003. NG setup response is sent by AMF2 15 to the gNB2 14, GUAMI of the AMF2 15 being 12345632400a, as shown by the process arrow 3004.

As summarized in box 303 of FIG. 3a, both AMF1 13 and AMF2 15 have (i.e., belong to) the same AMF region ID of 32, but AMF1 13 and AMF2 15 have (i.e., belong to) different AMF set IDs. Next, as summarized in box 304, gNB1 12 and gNB2 14 are connected through the Xn procedures (i.e., Xn setup). The Xn procedures start with the gNB1 12 sending the Xn setup request with i) AMF region ID of 32 and ii) the list of GUAMIs (i.e., 12345632800c in this case) for gNB1 12 to gNB2 14, as shown by the process arrow 3005. Next, gNB2 14 sends the Xn setup response with i) AMF region ID of 32 and ii) the list of GUAMIs (12345632400a) for gNB2 14 to the gNB1 12, as shown by the process arrow 3006. Because GUAMIs are exchanged between gNB1 12 and gNB2 14, each gNB knows the supported GUAMIs of the other gNB, which information can be used to determine whether an Xn handover would be rejected or not. At this point in the call flow, UE 11 is connected to one of the cells in gNB1 12, as summarized in box 305.

The call flow illustrated in FIG. 3a is continued in FIG. 3b, with the radio resource connection (RRC) procedure shown at the top, which starts with the UE 11 sending the RRC Setup Request message 3007 to the gNB1 12. In response, the gNB1 12 sends the RRC Setup message 3008 to the UE 11, which in turn sends the RRC Setup Complete message 3009 to the gNB1 12. Next, the Initial UE message 3010 is sent from the gNB1 12 to the AMF1 13, which in turn responds by sending the Initial Context Setup Request message 3011 to the gNB1 12. Subsequently, RRC Reconfiguration procedures 3012 are implemented between the gNB1 12 and the UE 11. This is followed by the Initial Context Setup Response message 3013 being sent from the gNB1 12 to the AMF1 13. At this point in the call flow sequence, the Protocol Data Unit (PDU) session setup procedure is completed, as summarized in box 306.

Next in the call flow sequence, as summarized in box 307 shown in FIG. 3b, the UE moves to another cell in gNB2 14. Because GUAMIs were previously exchanged between gNB1 12 and gNB2 14, each gNB knows the supported GUAMIs of the other gNB, and gNB1 12 (which has Xn connection to gNB2 14) checks whether gNB2 14 has connection to the currently connected AMF serving the UE 11, i.e., gNB1 12 checks whether the current GUAMI (i.e., 12345632800c) of the AMF serving the UE 11 is supported by (i.e., included in the list of GUAMIs for gNB2 14) or not. As gNB2 doesn't support the GUAMI 12345632800c (i.e., gNB2 14 doesn't have connection to the currently connected AMF serving the UE 11), gNB1 12 knows that Xn handover would be rejected by gNB2 14 with the cause "Unknown GUAMI ID". Therefore, gNB1 12 doesn't initiate the Xn handover, but instead proceeds directly with the NGAP-based handover. The handover is initiated by the gNB1 12 sending NGAP Handover Required message 3014 to the AMF1 13, as shown by the process arrow 3014, and the NGAP handover procedure continues thereafter, as summarized in box 308. In the hypothetical case gNB2 14 supports the GUAMI 12345632800c, gNB1 12 would initiate the Xn handover.

Although the above-described example method was presented mainly in the context of 5G NR, the method according to the present disclosure is applicable for Long Term Evolution (LTE) as well. In LTE, X2 handover is applicable only within the same Mobility Management Entity (MME). For LTE, X2AP procedures (X2AP is a control protocol found between eNBs on the X2 control plane), e.g., X2 setup request, X2 setup response, ENB configuration update, and ENB configuration Update Acknowledge messages in 3GPP X2AP specification (TS 36.423) shall be enhanced to include the new Information Element Served Globally Unique MME Identifiers (GUMMEIs).

## Claims

1. A method of operating a Radio Access Network, RAN, to optimize a handover between a first next Generation Node B, gNB, (12) and a second gNB (14), comprising:
connecting the first gNB (12) and the second gNB (14) by implementing Xn setup procedure, wherein:
i) the first gNB (12) is associated with at least a first Access and Mobility Function, AMF (13) serving a user equipment, UE, (11);
ii) the second gNB (14) is associated with at least a second AMF (15); and
iii) the Xn setup procedure includes:
a) sending (3005), by the first gNB to the second gNB, an Xn setup request including at least a list of Globally Unique AMF Identifiers, GUAMIs, associated with and supported by the first gNB (12); and
b) sending (3006), by the second gNB (14) to the first gNB (12), an Xn setup response including at least a list of GUAMIs associated with and supported by the second gNB (14);
in the case the UE (11) moves from a first cell of the first gNB (12) to a second cell of the second gNB (14),
1) checking by the first gNB (12) whether GUAMI of the first AMF (13) is included in the list of GUAMIs associated with the second gNB (14); and
2) if the GUAMI of the first AMF (13) is not included in the list of GUAMIs associated with the second gNB (14), directly initiating a Next Generation Application Protocol, NGAP, handover procedure from the first gNB (12) to the second gNB (14), without initiating an Xn-based handover from the first gNB (12) to the second gNB (14).

2. The method according to claim 1, wherein at least one of:
a) the Xn setup request additionally includes AMF region identifier, ID, for the first gNB; and
b) the Xn setup response additionally includes AMF region ID for the second gNB.

3. The method according to claim 2, wherein at least one of:
i) the first gNB (12) is associated with the at least one first AMF (13) by implementing a first Next Generation Application Protocol, NGAP, procedure; and
ii) the second gNB (14) is associated with the at least one second AMF (15) by implementing a second NGAP procedure.

4. The method according to claim 3, wherein at least one of:
i) the first NGAP procedure is initiated by the first gNB (12) sending a first NG setup request to the first AMF (13); and
ii) the second NGAP procedure is initiated by the second gNB (14) sending a second NG setup request to the second AMF (15).

5. The method according to claim 4, wherein at least one of:
a) the first AMF (13) responds to the first NG setup request by sending a first NG setup response including the GUAMI of the first AMF to the first gNB (12); and
b) the second AMF (15) responds to the second NG setup request by sending a second NG setup response including the GUAMI of the second AMF to the second gNB (14).

6. The method according to claim 1, further comprising:
if a change occurs to the list of Globally Unique AMF Identifiers, GUAMIs, associated with the first gNB (12), initiating a New Generation Radio Access Network, NG-RAN, Configuration Update procedure by the first gNB to inform the second gNB (14) of the changed list of GUAMIs associated with the first gNB.

7. The method according to claim 6, further comprising:
if a change occurs to the list of Globally Unique AMF Identifiers, GUAMIs, associated with the second gNB (14), initiating a New Generation Radio Access Network, NG-RAN, Configuration Update procedure by the second gNB to inform the first gNB (12) of the changed list of GUAMIs associated with the second gNB.

8. The method according to claim 6, wherein at least one of:
a) the Xn setup request additionally includes AMF region identifier, ID, for the first gNB; and
b) the Xn setup response additionally includes AMF region ID for the second gNB.

9. The method according to claim 8, wherein at least one of:
i) the first gNB (12) is associated with the at least one first AMF by implementing a first Next Generation Application Protocol, NGAP, procedure; and
ii) the second gNB (14) is associated with the at least one second AMF by implementing a second NGAP procedure.

10. The method according to claim 9, wherein at least one of:
i) the first NGAP procedure is initiated by the first gNB (12) sending a first NG setup request to the first AMF; and
ii) the second NGAP procedure is initiated by the second gNB (14) sending a second NG setup request to the second AMF.

11. The method according to claim 10, wherein at least one of:
a) the first AMF (13) responds to the first NG setup request by sending a first NG setup response including the GUAMI of the first AMF to the first gNB (12); and
b) the second AMF (15) responds to the second NG setup request by sending a second NG setup response including the GUAMI of the second AMF to the second gNB (14).

12. The method according to claim 7, wherein at least one of:
a) the Xn setup request additionally includes AMF region identifier, ID, for the first gNB; and
b) the Xn setup response additionally includes AMF region ID for the second gNB.

13. The method according to claim 12, wherein at least one of:
i) the first gNB is associated with the at least one first AMF by implementing a first Next Generation Application Protocol, NGAP, procedure; and
ii) the second gNB is associated with the at least one second AMF by implementing a second NGAP procedure.

14. The method according to claim 13, wherein at least one of:
i) the first NGAP procedure is initiated by the first gNB (12) sending a first NG setup request to the first AMF; and
ii) the second NGAP procedure is initiated by the second gNB (14) sending a second NG setup request to the second AMF.

15. The method according to claim 14, wherein at least one of:
a) the first AMF (13) responds to the first NG setup request by sending a first NG setup response including the GUAMI of the first AMF to the first gNB (12); and
b) the second AMF (15) responds to the second NG setup request by sending a second NG setup response including the GUAMI of the second AMF to the second gNB (14).

## Patentansprüche

1. Verfahren zum Betreiben eines Funkzugangsnetzwerks, RAN, zum Optimieren einer Übergabe zwischen einem ersten Next Generation Node B, gNB, (12) und einem zweiten gNB (14), umfassend:
Verbinden des ersten gNB (12) und des zweiten gNB (14) durch Implementieren einer Xn-Setup-Prozedur, wobei:
i) der erste gNB (12) mindestens einer ersten Zugriffs- und Mobilitätsfunktion, AMF (13), zugeordnet ist, die ein Benutzergerät, UE, (11) bedient;
ii) der zweite gNB (14) mindestens einer zweiten AMF (15) zugeordnet ist; und
iii) die Xn-Setup-Prozedur beinhaltet:
a) Senden (3005) einer Xn-Setup-Anforderung durch den ersten gNB an den zweiten gNB, die mindestens eine Liste von weltweit eindeutigen AMF-Kennungen, GUAMIs, enthält, die dem ersten gNB (12) zugeordnet und von diesem unterstützt sind; und
b) Senden (3006) einer Xn-Setup-Antwort durch den zweiten gNB (14) an den ersten gNB (12), die mindestens eine Liste von GUAMIs enthält, die dem zweiten gNB (14) zugeordnet und von diesem unterstützt sind;
in dem Fall, dass sich das UE (11) von einer ersten Zelle des ersten gNB (12) zu einer zweiten Zelle des zweiten gNB (14) bewegt,
1) Prüfen durch den ersten gNB (12), ob GUAMI der ersten AMF (13) in der Liste der GUAMIs, die dem zweiten gNB (14) zugeordnet sind, enthalten ist; und
2) wenn die GUAMI der ersten AMF (13) in der Liste der GUAMIs, die dem zweiten gNB (14) zugeordnet sind, nicht enthalten ist, direktes Initiieren einer Next Generation Application Protocol, NGAP,-Übergabeprozedur von dem ersten gNB (12) an den zweiten gNB (14), ohne eine Xn-basierte Übergabe von dem ersten gNB (12) an den zweiten gNB (14) zu initiieren.

2. Verfahren nach Anspruch 1, wobei mindestens eines von Folgendem vorliegt:
a) die Xn-Setup-Anforderung enthält zusätzlich die AMF-Regionskennung, ID, für den ersten gNB; und
b) die Xn-Setup-Antwort enthält zusätzlich die AMF-Regions-ID für den zweiten gNB.

3. Verfahren nach Anspruch 2, wobei mindestens eines von Folgendem vorliegt:
i) der erste gNB (12) ist der mindestens einen ersten AMF (13) durch Implementieren einer ersten Next Generation Application Protocol, NGAP,-Prozedur zugeordnet; und
ii) der zweite gNB (14) ist der mindestens einen zweiten AMF (15) durch Implementieren einer zweiten NGAP-Prozedur zugeordnet.

4. Verfahren nach Anspruch 3, wobei mindestens eines von Folgendem vorliegt:
i) die erste NGAP-Prozedur wird durch den ersten gNB (12) initiiert, indem eine erste NG-Setup-Anforderung an die erste AMF (13) gesendet wird; und
ii) die zweite NGAP-Prozedur wird durch den zweiten gNB (14) initiiert, indem eine zweite NG-Setup-Anforderung an die zweite AMF (15) gesendet wird.

5. Verfahren nach Anspruch 4, wobei mindestens eines von Folgendem vorliegt:
a) die erste AMF (13) antwortet auf die erste NG-Setup-Anforderung, indem sie eine erste NG-Setup-Antwort, die die GUAMI der ersten AMF beinhaltet, an den ersten gNB (12) sendet; und
b) die zweite AMF (15) antwortet auf die zweite NG-Setup-Anforderung, indem sie eine zweite NG-Setup-Antwort, die die GUAMI der zweiten AMF beinhaltet, an den zweiten gNB (14) sendet.

6. Verfahren nach Anspruch 1, ferner umfassend:
wenn eine Änderung an der Liste der weltweit eindeutigen AMF-Kennungen, GUAMIs, auftritt, die dem ersten gNB (12) zugeordnet sind, Initiieren einer New Generation Radio Access Network, NG-RAN, - Konfigurationsaktualisierungsprozedur durch den ersten gNB, um den zweiten gNB (14) über die geänderte Liste der GUAMIs zu informieren, die dem ersten gNB zugeordnet sind.

7. Verfahren nach Anspruch 6, ferner umfassend:
wenn eine Änderung an der Liste der weltweit eindeutigen AMF-Kennungen, GUAMIs, auftritt, die dem zweiten gNB (14) zugeordnet sind, Initiieren einer New Generation Radio Access Network, NG-RAN, - Konfigurationsaktualisierungsprozedur durch den zweiten gNB, um den ersten gNB (12) über die geänderte Liste der GUAMIs zu informieren, die dem zweiten gNB zugeordnet sind.

8. Verfahren nach Anspruch 6, wobei mindestens eines von Folgendem vorliegt:
a) die Xn-Setup-Anforderung enthält zusätzlich die AMF-Regionskennung, ID, für den ersten gNB; und
b) die Xn-Setup-Antwort enthält zusätzlich die AMF-Regions-ID für den zweiten gNB.

9. Verfahren nach Anspruch 8, wobei mindestens eines von Folgendem vorliegt:
i) der erste gNB (12) ist der mindestens einen ersten AMF durch Implementieren einer ersten Next Generation Application Protocol, NGAP,-Prozedur zugeordnet; und
ii) der zweite gNB (14) ist der mindestens einen zweiten AMF durch Implementieren einer zweiten NGAP-Prozedur zugeordnet.

10. Verfahren nach Anspruch 9, wobei mindestens eines von Folgendem vorliegt:
i) die erste NGAP-Prozedur wird durch den ersten gNB (12) initiiert, indem eine erste NG-Setup-Anforderung an die erste AMF gesendet wird; und
ii) die zweite NGAP-Prozedur wird durch den zweiten gNB (14) initiiert, indem eine zweite NG-Setup-Anforderung an die zweite AMF gesendet wird.

11. Verfahren nach Anspruch 10, wobei mindestens eines von Folgendem vorliegt:
a) die erste AMF (13) antwortet auf die erste NG-Setup-Anforderung, indem sie eine erste NG-Setup-Antwort, die die GUAMI der ersten AMF beinhaltet, an den ersten gNB (12) sendet; und
b) die zweite AMF (15) antwortet auf die zweite NG-Setup-Anforderung, indem sie eine zweite NG-Setup-Antwort, die die GUAMI der zweiten AMF beinhaltet, an den zweiten gNB (14) sendet.

12. Verfahren nach Anspruch 7, wobei mindestens eines von Folgendem vorliegt:
a) die Xn-Setup-Anforderung enthält zusätzlich die AMF-Regionskennung, ID, für den ersten gNB; und
b) die Xn-Setup-Antwort enthält zusätzlich die AMF-Regions-ID für den zweiten gNB.

13. Verfahren nach Anspruch 12, wobei mindestens eines von Folgendem vorliegt:
i) der erste gNB ist der mindestens einen ersten AMF durch Implementieren einer ersten Next Generation Application Protocol, NGAP,-Prozedur zugeordnet; und
ii) der zweite gNB ist der mindestens einen zweiten AMF durch Implementieren einer zweiten NGAP-Prozedur zugeordnet.

14. Verfahren nach Anspruch 13, wobei mindestens eines von Folgendem vorliegt:
i) die erste NGAP-Prozedur wird durch den ersten gNB (12) initiiert, indem eine erste NG-Setup-Anforderung an die erste AMF gesendet wird; und
ii) die zweite NGAP-Prozedur wird durch den zweiten gNB (14) initiiert, indem eine zweite NG-Setup-Anforderung an die zweite AMF gesendet wird.

15. Verfahren nach Anspruch 14, wobei mindestens eines von Folgendem vorliegt:
a) die erste AMF (13) antwortet auf die erste NG-Setup-Anforderung, indem sie eine erste NG-Setup-Antwort, die die GUAMI der ersten AMF beinhaltet, an den ersten gNB (12) sendet; und
b) die zweite AMF (15) antwortet auf die zweite NG-Setup-Anforderung, indem sie eine zweite NG-Setup-Antwort, die die GUAMI der zweiten AMF beinhaltet, an den zweiten gNB (14) sendet.

## Revendications

1. Procédé de fonctionnement d'un réseau d'accès radio, RAN, pour optimiser un transfert intercellulaire entre un premier nœud B de prochaine génération, gNB, (12) et un second gNB (14), comprenant :
la connexion du premier gNB (12) et du second gNB (14) par la mise en œuvre d'une procédure de paramétrage Xn, dans lequel :
i) le premier gNB (12) est associé à au moins une première fonction d'accès et de mobilité, AMF (13) desservant un équipement utilisateur, UE, (11) ;
ii) le second gNB (14) est associé à au moins une seconde AMF (15) ; et
iii) la procédure de paramétrage Xn inclut :
a) l'envoi (3005), par le premier gNB au second gNB, d'une requête de paramétrage Xn incluant au moins une liste d'identifiants d'AMF globalement uniques, GUAMI, associés au premier gNB (12) et pris en charge par celui-ci ; et
b) l'envoi (3006), par le second gNB (14) au premier gNB (12), d'une réponse de paramétrage Xn incluant au moins une liste de GUAMI associés au second gNB (14) et pris en charge par celui-ci ;
dans le cas où l'UE (11) passe d'une première cellule du premier gNB (12) à une seconde cellule du second gNB (14),
1) la vérification, par le premier gNB (12), de si un GUAMI de la première AMF (13) est inclus dans la liste de GUAMI associés au second gNB (14) ; et
2) si le GUAMI de la première AMF (13) n'est pas inclus dans la liste de GUAMI associés au second gNB (14), l'initiation, directement, d'une procédure de transfert intercellulaire de protocole d'application de prochaine génération, NGAP, du premier gNB (12) au second gNB (14), sans initier un transfert basé sur Xn du premier gNB (12) au second gNB (14).

2. Procédé selon la revendication 1, dans lequel au moins l'un parmi :
a) la requête de paramétrage Xn inclut en outre un identifiant, ID, de région d'AMF pour le premier gNB ; et
b) la réponse de paramétrage Xn inclut en outre un ID de région d'AMF pour le second gNB.

3. Procédé selon la revendication 2, dans lequel au moins l'un parmi :
i) le premier gNB (12) est associé à l'au moins une première AMF (13) par la mise en œuvre d'une première procédure de protocole d'application de prochaine génération, NGAP ; et
ii) le second gNB (14) est associé à l'au moins une seconde AMF (15) par la mise en œuvre d'une seconde procédure de NGAP.

4. Procédé selon la revendication 3, dans lequel au moins l'un parmi :
i) la première procédure de NGAP est initiée par le premier gNB (12) envoyant une première requête de paramétrage NG à la première AMF (13) ; et
ii) la seconde procédure de NGAP est initiée par le second gNB (14) envoyant une seconde requête de paramétrage NG à la seconde AMF (15).

5. Procédé selon la revendication 4, dans lequel au moins l'un parmi :
a) la première AMF (13) répond à la première requête de paramétrage NG par l'envoi d'une première réponse de paramétrage NG incluant le GUAMI de la première AMF au premier gNB (12) ; et
b) la seconde AMF (15) répond à la seconde requête de paramétrage NG par l'envoi d'une seconde réponse de paramétrage NG incluant le GUAMI de la seconde AMF au second gNB (14).

6. Procédé selon la revendication 1, comprenant en outre :
si une modification survient dans la liste d'identifiants d'AMF globalement uniques, GUAMI, associés au premier gNB (12), l'initiation d'une procédure de mise à jour de configuration de réseau d'accès radio de nouvelle génération, NG-RAN, par le premier gNB pour informer le second gNB (14) de la liste modifiée de GUAMI associés au premier gNB.

7. Procédé selon la revendication 6, comprenant en outre :
si une modification survient dans la liste d'identifiants d'AMF globalement uniques, GUAMI, associés au second gNB (14), l'initiation d'une procédure de mise à jour de configuration de réseau d'accès radio de nouvelle génération, NG-RAN, par le second gNB pour informer le premier gNB (12) de la liste modifiée de GUAMI associés au second gNB.

8. Procédé selon la revendication 6, dans lequel au moins l'un parmi :
a) la requête de paramétrage Xn inclut en outre un identifiant, ID, de région d'AMF pour le premier gNB ; et
b) la réponse de paramétrage Xn inclut en outre un ID de région d'AMF pour le second gNB.

9. Procédé selon la revendication 8, dans lequel au moins l'un parmi :
i) le premier gNB (12) est associé à l'au moins une première AMF par la mise en œuvre d'une première procédure de protocole d'application de prochaine génération, NGAP ; et
ii) le second gNB (14) est associé à l'au moins une seconde AMF par la mise en œuvre d'une seconde procédure de NGAP.

10. Procédé selon la revendication 9, dans lequel au moins l'un parmi :
i) la première procédure de NGAP est initiée par le premier gNB (12) envoyant une première requête de paramétrage NG à la première AMF ; et
ii) la seconde procédure de NGAP est initiée par le second gNB (14) envoyant une seconde requête de paramétrage NG à la seconde AMF.

11. Procédé selon la revendication 10, dans lequel au moins l'un parmi :
a) la première AMF (13) répond à la première requête de paramétrage NG par l'envoi d'une première réponse de paramétrage NG incluant le GUAMI de la première AMF au premier gNB (12) ; et
b) la seconde AMF (15) répond à la seconde requête de paramétrage NG par l'envoi d'une seconde réponse de paramétrage NG incluant le GUAMI de la seconde AMF au second gNB (14).

12. Procédé selon la revendication 7, dans lequel au moins l'un parmi :
a) la requête de paramétrage Xn inclut en outre un identifiant, ID, de région d'AMF pour le premier gNB ; et
b) la réponse de paramétrage Xn inclut en outre un ID de région d'AMF pour le second gNB.

13. Procédé selon la revendication 12, dans lequel au moins l'un parmi :
i) le premier gNB est associé à l'au moins une première AMF par la mise en œuvre d'une première procédure de protocole d'application de prochaine génération, NGAP ; et
ii) le second gNB est associé à l'au moins une seconde AMF par la mise en œuvre d'une seconde procédure de NGAP.

14. Procédé selon la revendication 13, dans lequel au moins l'un parmi :
i) la première procédure de NGAP est initiée par le premier gNB (12) envoyant une première requête de paramétrage NG à la première AMF ; et
ii) la seconde procédure de NGAP est initiée par le second gNB (14) envoyant une seconde requête de paramétrage NG à la seconde AMF.

15. Procédé selon la revendication 14, dans lequel au moins l'un parmi :
a) la première AMF (13) répond à la première requête de paramétrage NG par l'envoi d'une première réponse de paramétrage NG incluant le GUAMI de la première AMF au premier gNB (12) ; et
b) la seconde AMF (15) répond à la seconde requête de paramétrage NG par l'envoi d'une seconde réponse de paramétrage NG incluant le GUAMI de la seconde AMF au second gNB (14).
